(19) Europäisches Patentamt
European Patent Office
Office européen des brevets

(11) EP 4 745 844 A1

(12) EUROPEAN PATENT APPLICATION

(43) Date of publication:
20.05.2026 Bulletin 2026/21

(51) International Patent Classification (IPC):
G06N 3/049 (2023.01)    G06N 3/10 (2006.01)
G06N 3/048 (2023.01)    G06N 3/06 (2006.01)

(21) Application number: 25215193.1

(22) Date of filing: 12.11.2025

(52) Cooperative Patent Classification (CPC):
G06N 3/049; G06N 3/10; G06N 3/048; G06N 3/06

(84) Designated Contracting States:
AL AT BE BG CH CY CZ DE DK EE ES FI FR GB GR HR HU IE IS IT LI LT LU LV MC ME MK MT NL NO PL PT RO RS SE SI SK SM TR
Designated Extension States:
BA
Designated Validation States:
GE KH LA MA MD TN

(30) Priority: 13.11.2024 IN 202421087827

(71) Applicant: Tata Consultancy Services Limited
Maharashtra (IN)

(72) Inventors:
• DEY, Sounak
700160 Kolkata, West Bengal (IN)
• PAL, Arpan
700160 Kolkata, West Bengal (IN)
• MUKHERJEE, Arijit
700160 Kolkata, West Bengal (IN)
• BANERJEE, Dighanchal
700160 Kolkata, West Bengal (IN)
• BASAK, Barnali
700160 Kolkata, West Bengal (IN)
• DEY, Ajoy
700160 Kolkata, West Bengal (IN)
• KAHALI, Sayan
700160 Kolkata, West Bengal (IN)
• SURI, Manan
110016 New Delhi, Delhi (IN)
• PAUL, Debarati
700160 Kolkata, West Bengal (IN)
• PRADHAN, Sayan
700160 Kolkata, West Bengal (IN)

(74) Representative: Goddar, Heinz J.
Boehmert & Boehmert
Anwaltspartnerschaft mbB
Pettenkoferstrasse 22
80336 München (DE)

(54) FRAMEWORK FOR SIMULATION AND CROSS-PLATFORM DEPLOYMENT OF SPIKING NEURAL NETWORK MODELS

(57) This disclosure relates generally to framework for simulation and cross-platform deployment of a Spiking Neural Network (SNN). models In conventional approach, SNN model created in hardware-agnostic framework suffer performance issues when deployed in a hardware-specific platform as the current standards for interoperability of the models among multiple frameworks maps only interfaces and does not consider difference in behavior due to different order of atomic computations, decay rates of current and voltage, and the reset mechanisms for membrane potential. The present disclosure overcomes this by creating a hardware abstract library having different flavors of middleware synaptic neuron corresponding to different hardware-specific software frameworks. The variation due to decay rates of current and voltage, and the reset mechanisms for membrane potential are determined and atomic instructions are parameterized using the variations. The hardware abstract library is created for each hardware-specific software framework by determining an order of execution of the atomic instructions.

FIG. 3

**Description**

CROSS-REFERENCE TO RELATED APPLICATIONS AND PRIORITY

The present application claims priority from Indian provisional application no. 202421087827, filed on November 13, 2024. The entire contents of the aforementioned application are incorporated herein by reference.

TECHNICAL FIELD

The disclosure herein generally relates to neuromorphic computing, and, more particularly, to a framework for simulation and cross-platform deployment of spiking neural network models.

BACKGROUND

Neuromorphic computing is a brain-inspired computing model designed to mimic the efficiency, versatility, and resilience of the human brain. This bio-inspired model emphasizes implementing models of neural systems to understand how the morphology of individual neurons, synapses, circuits, and architectures lead to desirable computations. Neuromorphic computing requires creating a spiking neural network (SNN) model and algorithms for neuromorphic implementation, wherein the SNN model is defined based on an associated application. In some approaches, a Deep Neural Network (DNN) is trained for a task or an application of interest and then mapping is performed to convert it to the SNN model. The hardware realization of neuromorphic computing is based on metal-oxide-semiconductor-based hardware which includes but not limited to memristors, spintronic memories, threshold switches, transistors, and so on.

A large number of neuromorphic computing (NC) and in-memory computing (IMC) hardwares are coming up in market. T1 by Innatera, Akida™ by BrainChip, BrainScaleS-2 by Universität Heidelberg; ReckOn by Charlotte Frenkel; Speck™, Dynap™-CNN and Xylo™ by SynSense, Loihi 2 by Intel are few of the neuromorphic chips and architectures available in the market. Each of these chips is diverse and places constraints on the neural network model. For example, the neurosynaptic core of some of these hardware are limited in number, thus it may affect the maximum number of synapses that one neuron can be connected to directly. Similarly, the hardware can be application-specific. The Spiking Neural Processor T1 by Innatera is an analog mixed-signal spiking neural processor for low-power edge applications and due to the limited number of neurons and constrained Central Processing Unit (CPU) power, the chip is particularly suitable for processing one-dimensional signals, such as those emerging in audio and healthcare applications. Akida™ supports a wide variety of neural networks and can execute complex networks and is suitable for broad range of applications, including robotics and automation in industry, real-time sensing in automotive, vital-signs prediction in on-device health monitoring, and intelligent automation in homes. International Business Machines Corporation's neural inference architecture, NorthPole comprises computation units to simulate biological neurons and is suitable for image classification, detection, segmentation, natural language processing, and speech recognition. NorthPole does not provide training functionality and focuses on inference only. The Speck™ is designed for real-time vision processing applications such as gesture control, fall detection, and object tracking. Intel's neuromorphic research chip, Loihi 2 includes an inter-chip communication interface to facilitate the creation of large three-dimensional (3D) chip clusters. Each of these are developing its own software stack with their self-defined standards and procedures for application development abiding their hardware design and limitations. This brings in heterogeneity in the market that makes developers' lives hard and attenuate the growth of neuromorphic applications. Designing end-to-end applications for neuromorphic is hard due to a huge conceptual paradigm shift and the diversity in algorithms, architectures, and available hardware platforms.

Many existing methods for porting the SNN models from one framework to another suffer from several limitations and challenges. For instance, the performance of models in different frameworks vary due to a variety of factors but not limited to customized implementations of neuron dynamics and synaptic connections, various encoding schemes and data alignments, different processing sequence of data dimensions, various learning algorithms, and so on. For an example, cuba.Neuron in Lava-DL framework has equivalent dynamics to LIFTorch neuron in RockPool framework, but they are not similar. Thus, if a model trained in Lava-DL with cuba.Neuron is ported to RockPool, the model performance is prone to reduction in performance. Another challenge is the lack of a standard intermediate SNN model representation, for seamless porting of models developed and trained in one framework into another for inference without compromising efficiency of model performance.

Various standards have been developed for defining the SNN model which enables interoperability of the models among multiple frameworks. One such standard is Neuromorphic Intermediate Representation (NIR). NIR standardizes interfaces of neuron dynamics, synaptic connections and enables interoperability of neuron models. However, it does not standardize individual implementations or guarantee model performance to be preserved across various frameworks. For example, NIR standardizes interface of synaptic conductance-based neuron dynamics as parameterized nir.CubaLIF(). This can be used to map snn.Synaptic in snnTorch framework to a compactable but not identical target model such as slayer.cuba.Neuron in Lava-DL framework or to LIFTorch neuron in the RockPool framework. This mapping introduces differences in how spike is generated and how state variable decay and resets which result in degraded performance in target hardware platforms.

SUMMARY

Embodiments of the present disclosure present technological improvements as solutions to one or more of the above-mentioned technical problems recognized by the inventors in conventional systems. For example, in one embodiment, a method for simulation and cross-platform deployment of Spiking Neural Network models is provided. The method comprises receiving, via one or more hardware processors, a plurality of configurations comprising a target hardware choice for deployment associated with a model to be created from one or more users in a middleware environment; creating, via the one or more hardware processors, one or more hardware-abstract models based on the plurality of configurations associated with the model creation using a plurality of simulation libraries, and one or more tools available in the middleware environment; selecting, via the one or more hardware processors, at least one hardware-abstract model amongst the one or more hardware-abstract models by comparing performance metrics of the one or more hardware-abstract models simulated on a hardware-agnostic simulation framework; extracting, via the one or more hardware processors, one or more hardware-agnostic intermediate instructions from the at least one selected hardware-abstract model; constructing, via the one or more hardware processors, the one or more hardware processors, a hardware-specific model of the hardware-agnostic meta model by translating the one or more hardware-agnostic intermediate instructions to one or more hardware-specific layers using a hardware specific library of a target hardware; simulating, via the one or more hardware processors, the hardware specific model on a hardware-specific simulation framework of the target hardware; and deploying, via the one or more hardware processors, the simulated hardware-specific model on the target hardware based on a comparison between the performance of the at least one selected hardware-abstract model simulated on the hardware-agnostic simulation framework, and the hardware-specific model simulated on the hardware-specific simulation framework.

In an embodiment, the plurality of configurations comprises at least (i) one or more model design configuration; (ii) one or more model network configuration; (iii) one or more target performance metrics; and (iv) one or more hardware parameter for deploying the at least one selected hardware-abstract model.

In an embodiment, the plurality of simulation libraries comprises (i) one or more libraries containing one or more architectures of one or more neural networks; (ii) one or more learning algorithms; and (iii) a hardware-abstraction library, and wherein the plurality of simulation libraries enable at least (i) conversion of an Artificial Neural Network (ANN) to a Spiking Neural Network (SNN) or (ii) creation of the one or more hardware-abstract models based on the plurality of configurations provided by the one or more users in the middleware environment.

In an embodiment, the hardware-abstraction library is created by identifying, via the or more hardware processors, one or more atomic operation of a plurality of neuromorphic computational primitives associated with the hardware-specific simulation framework of the target hardware; constructing, via the one or more hardware processors, an atomic instruction corresponding to each of the one or more atomic operations using a plurality of predefined rules; parametrizing, via the one or more hardware processors, the atomic instruction with at least one adjustable parameter corresponding to (i) one or more current decay rates (ii) one or more voltage decay rates, and (iii) one or more reset mechanisms for membrane potential to enable a variation of the corresponding one or more atomic operations; and creating, via the one or more hardware processors, the hardware abstract library of the one or more hardware-specific versions by determining an execution order of the parameterized atomic instruction corresponding to each of the one or more hardware-specific versions of each of the plurality of neuromorphic computational primitives.

In another aspect, a system for simulation and cross-platform deployment of Spiking Neural Network models is provided is provided. The system comprises: a memory storing instructions; one or more communication interfaces; and one or more hardware processors coupled to the memory via the one or more communication interfaces, wherein the one or more hardware processors are configured by the instructions to: receive a plurality of configurations comprising a target hardware choice for deployment associated with a model to be created from one or more users in a middleware environment; create one or more hardware-abstract models based on the plurality of configurations associated with the model creation using a plurality of simulation libraries, and one or more tools available in the middleware environment; select at least one hardware-abstract model amongst the one or more hardware-abstract models by comparing performance metrics of the one or more hardware-abstract models simulated on a hardware-agnostic simulation framework; extract one or more hardware-agnostic intermediate instructions from the at least one selected hardware-abstract model; construct a hardware-specific model of the hardware-agnostic meta model by translating the one or more hardware-agnostic intermediate instructions to one or more hardware-specific layers using a hardware specific library of a target hardware; simulate the hardware specific model on a hardware-specific simulation framework of the target hardware; and deploy the simulated hardware-specific model on the target hardware based on a comparison between the performance of the at least one selected hardware-abstract model simulated on the hardware-agnostic simulation framework, and the hardware-specific model simulated on the hardware-specific simulation framework.

In an embodiment, the plurality of configurations comprises at least (i) one or more model design configuration; (ii) one or more model network configuration; (iii) one or more target performance metrics; and (iv) one or more hardware parameter for deploying the at least one selected hardware-abstract model.

In an embodiment, the plurality of simulation libraries comprises (i) one or more libraries containing one or more architectures of one or more neural networks; (ii) one or more learning algorithms; and (iii) a hardware-abstraction library, and wherein the plurality of simulation libraries enable at least (i) conversion of an Artificial Neural Network (ANN) to a Spiking Neural Network (SNN) or (ii) creation of the one or more hardware-abstract models based on the plurality of configurations provided by the one or more users in the middleware environment.

In an embodiment, the hardware-abstraction library is created by identifying one or more atomic operation of a plurality of neuromorphic computational primitives associated with the hardware-specific simulation framework of the target hardware; constructing an atomic instruction corresponding to each of the one or more atomic operations using a plurality of predefined rules; parametrizing the atomic instruction with at least one adjustable parameter corresponding to (i) one or more current decay rates (ii) one or more voltage decay rates, and (iii) one or more reset mechanisms for membrane potential to enable a variation of the corresponding one or more atomic operations; and creating the hardware abstract library of the one or more hardware-specific versions by determining an execution order of the parameterized atomic instruction corresponding to each of the one or more hardware-specific versions of each of the plurality of neuromorphic computational primitives.

In yet another aspect, there are provided one or more non-transitory machine-readable information storage media comprising one or more instructions which when executed by one or more hardware processors cause simulation and cross-platform deployment of Spiking Neural Network models by receiving a plurality of configurations comprising a target hardware choice for deployment associated with a model to be created from one or more users in a middleware environment; creating one or more hardware-abstract models based on the plurality of configurations associated with the model creation using a plurality of simulation libraries, and one or more tools available in the middleware environment; selecting at least one hardware-abstract model amongst the one or more hardware-abstract models by comparing performance metrics of the one or more hardware-abstract models simulated on a hardware-agnostic simulation framework; extracting one or more hardware-agnostic intermediate instructions from the at least one selected hardware-abstract model; constructing the one or more hardware processors, a hardware-specific model of the hardware-agnostic meta model by translating the one or more hardware-agnostic intermediate instructions to one or more hardware-specific layers using a hardware specific library of a target hardware; simulating the hardware specific model on a hardware-specific simulation framework of the target hardware; and deploying the simulated hardware-specific model on the target hardware based on a comparison between the performance of the at least one selected hardware-abstract model simulated on the hardware-agnostic simulation framework, and the hardware-specific model simulated on the hardware-specific simulation framework.

In an embodiment, the plurality of configurations comprises at least (i) one or more model design configuration; (ii) one or more model network configuration; (iii) one or more target performance metrics; and (iv) one or more hardware parameter for deploying the at least one selected hardware-abstract model.

In an embodiment, the plurality of simulation libraries comprises (i) one or more libraries containing one or more architectures of one or more neural networks; (ii) one or more learning algorithms; and (iii) a hardware-abstraction library, and wherein the plurality of simulation libraries enable at least (i) conversion of an Artificial Neural Network (ANN) to a Spiking Neural Network (SNN) or (ii) creation of the one or more hardware-abstract models based on the plurality of configurations provided by the one or more users in the middleware environment.

In an embodiment, the one or more non-transitory machine-readable information storage mediums comprising one or more instructions which when executed by one or more hardware processors cause creation of the hardware-abstraction library by identifying one or more atomic operation of a plurality of neuromorphic computational primitives associated with the hardware-specific simulation framework of the target hardware; constructing an atomic instruction corresponding to each of the one or more atomic operations using a plurality of predefined rules; parametrizing, via the one or more hardware processors, the atomic instruction with at least one adjustable parameter corresponding to (i) one or more current decay rates (ii) one or more voltage decay rates, and (iii) one or more reset mechanisms for membrane potential to enable a variation of the corresponding one or more atomic operations; and creating the hardware abstract library of the one or more hardware-specific versions by determining an execution order of the parameterized atomic instruction corresponding to each of the one or more hardware-specific versions of each of the plurality of neuromorphic computational primitives.

It is to be understood that both the foregoing general description and the following detailed description are exemplary and explanatory only and are not restrictive of the invention, as claimed.

BRIEF DESCRIPTION OF THE DRAWINGS

The accompanying drawings, which are incorporated in and constitute a part of this disclosure, illustrate exemplary embodiments and, together with the description, serve to explain the disclosed principles:

FIG. 1 illustrates an exemplary system for simulation and cross-platform deployment of spiking neural network models to some embodiments of the present disclosure.

FIG. 2A and FIG. 2B is a flow diagram illustrating a method for framework for simulation and cross-platform deployment of spiking neural network models in accordance with some embodiments of the present disclosure.

FIG. 3 is an architectural overview of the framework for simulation and cross-platform deployment of Spiking Neural Network models, according to some embodiments of the present disclosure.

FIG. 4A depicts a conventional approach for a conversion of a feed-forward model from snnTorch to Lava-DL and Rockpool via a Neuromorphic Intermediate Representation (NIR) approach, according to some embodiments of the present disclosure.

FIG. 4B depicts a conversion of the feed-forward model from snnTorch to Lava-DL and the Rockpool via a hardware-agnostic layer on top of the Neuromorphic Intermediate Representation (NIR), according to some embodiments of the present disclosure.

DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Existing neuromorphic hardware's with bespoke software stack, have created a fragmented ecosystem which hinders industry-wide adoption and technology transfer. It necessitates a need for hardware/software (HW/SW) co-design to facilitate interoperability and foster platform-agnostic solutions. The present disclosure provides a system and a method that utilizes a hardware-agnostic layer on the top of Neuromorphic Intermediate Representation (NIR) to ensure interoperability across different hardware frameworks without affecting model performance. This is done by abstracting hardware-specific software components like neuron, synaptic connections and so on in a hardware-agnostic framework and extends NIR to support the conversion from the hardware agnostic abstract component to the hardware-specific concrete component. The disclosed method preserves the performance of a model trained on hardware-agnostic framework such as snnTorch, when inferred in hardware specific framework such as Lava-DL, Rockpool, Sinabs and so on. The variation in model performance across different hardware-specific frameworks is primarily caused by a different behavior of computational primitive. In the context of brain-inspired computing, spiking neural networks (SNNs), and neuromorphic engineering, Synaptic Leaky Integrate-and-Fire (LIF) neuron and synaptic connections is one such computational primitive. The behavior of computational primitive (Synaptic Leaky Integrate-and-Fire neuron) under different frameworks vary due to (i) a different order of primitive computations, (ii) a different current decay and voltage decay rates, and (iii) one or more various reset mechanisms for membrane potential. For the purpose of preserving model performance across the different hardware-specific frameworks, a common hardware-agnostic framework was generated by modularizing different hardware simulator (Lava-DL, Rockpool) specific implementations of Synaptic-LIF neuron. The Synaptic-LIF neuron operation can be broken down into multiple atomic operations such as (i) update of synaptic conductance, which is the instant increase in synaptic conductance when a presynaptic neuron fires an action potential($WX[t + 1]$), (ii) decay of synaptic conductance, which is the exponential decay in the synaptic conductance over time ($\propto I_{syn}[t]$), (iii) update of membrane potential, which is the increment in the membrane potential in response to an injected synaptic current($\propto I_{syn}[t + 1]$), (iv) decay of membrane potential, which is the exponential decay in the membrane potential over time ($\beta U_{mem}[t]$), (v) trigger of spike, which is the action potential triggered by the neuron when the membrane potential of postsynaptic neuron reaches a threshold ($S_{out}[t]$), and (vi) reset of membrane potential, which is the resetting the membrane potential to an equilibrium potential value upon the membrane potential reaching a predetermined threshold ($R[t]$). The order of execution of these atomic operation vary across different hardware simulator framework. Where,

$X[t + 1]$, is the incoming spike from the pre-synaptic neuron at the time step 't + 1',

$W$ is the weight associated with $X[t + 1]$,

$I_{syn}$ is the synaptic current at the time 't',

$I_{syn}[t + 1]$ is the synaptic current at the timestep 't +1',

$\propto$ is the decay constant of synaptic current,

$U_{mem}[t]$ *is the membrane potentiat at the time 't',*
$U_{mem}[t + 1]$ *is the membrane potential at the timestep 't + 1',*
β is the decay constant of membrane potential,
$S_{out}[t + 1]$ *is the output spike at the timestep 't',*
R[t]is the reset value of the membrane potential.

For example, behavior of Synaptic-LIF in Lava-DL, known as cuba.Neuron is formalized as below:

$$I_{syn}[t + 1] = (1-\propto)I_{syn}[t] + X[t + 1]$$

$$U_{mem}[t + 1] = (1 - \beta)U_{mem}[t] + I_{syn}[t + 1]$$

$$S_{out}[t + 1] = U_{mem}[t + 1] \geq U_{thr}$$

$$U_{mem}[t + 1] = U_{mem}[t + 1] (1 - S_{out}[t + 1])$$

Where,

$I_{syn}$ is the synaptic current at the time 't',
$I_{syn}[t + 1]$ *is the synaptic current at the timestep 't +1',*
$\propto$ *is the decay constant of synaptic current,*
$X[t + 1]$,is the incoming spike from the pre-synaptic neuron at the time step 't +1',
$U_{mem}[t]$ *is the membrane potentiat at the time 't',*
$U_{mem}[t + 1]$ *is the membrane potential at the timestep 't +1',*
β is the decay constant of membrane potential,
$S_{out}[t + 1]$ *is the output spike at the timestep 't + 1',*
$U_{thr}$ *is the* pre-determined threshold for membrane potential for generation of neuron spikes

Similarly, the Synaptic-LIF behavior in RockPool, known as LIFTorch is formalized as below:

$$I_{syn}[t + 1] += X[t + 1] + X_{rec}.W_{rec}$$

$$I_{syn}[t + 1] *= exp\left(-dt/\tau_{syn}\right)$$

$$U_{mem}[t + 1] *= exp\left(-dt/\tau_{mem}\right)$$

$$U_{mem}[t + 1] += I_{syn}[t + 1] + b + \sigma\zeta[t + 1]$$

$$S_{out}[t + 1] = U_{mem}[t + 1] \geq U_{thr}$$

$$U_{mem}[t + 1] = U_{mem}[t + 1] - U_{thr}$$

Where,

$I_{syn}[t + 1] +$ *isthe* synaptic current at the time $t + 1$,
$X[t + 1]$ is the external input current from the feed foward layers,
$X_{rec}$ is the outputspike or activation from previous layer,
$W_{rec}$ is the recurrent weight,
$U_{mem}[t + 1]$ is the membrane potential at the next timestep 't + 1,

$exp\left(-dt/\tau_{syn}\right)$ is the exponential decay of synaptic current,

$\tau_{syn}$ is the synaptic time constant,

$exp\left(-dt/\tau_{mem}\right)$ is the exponential decay of membrane potential,

$\tau_{mem}$ is the membrate time constant.

It is understood that the implementation of Synaptic-LIF differs in different frameworks. In addition, the residual current rate 1-$\propto$ in Lava-DL maps to exponential decay of synaptic current $exp(-dt/\tau_{syn})$ in Rockpool and residual voltage rate 1 - $\beta$ in Lava-DL maps to exponential decay of membrane potential $exp(-dt/\tau_{mem})$ in Rockpool. These mappings differ across frameworks. There is a variation in voltage mechanisms also. In Lava-DL, the voltage resets to zero, whereas in Rockpool the voltage threshold is subtracted. These different behaviors are modularized as different flavors of Middleware synaptic neuron in snnTorch in the present disclosure.

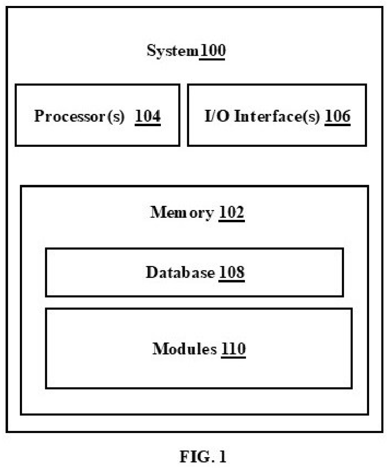

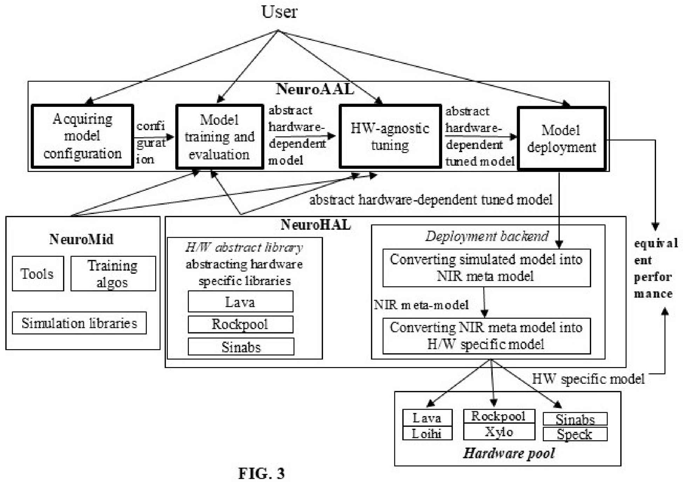

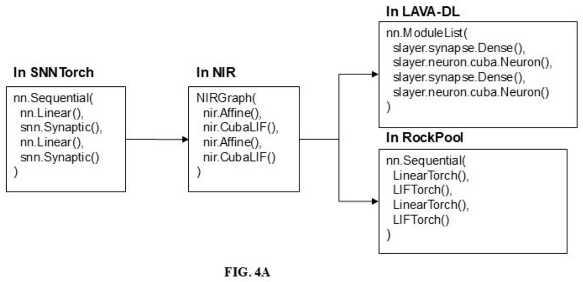

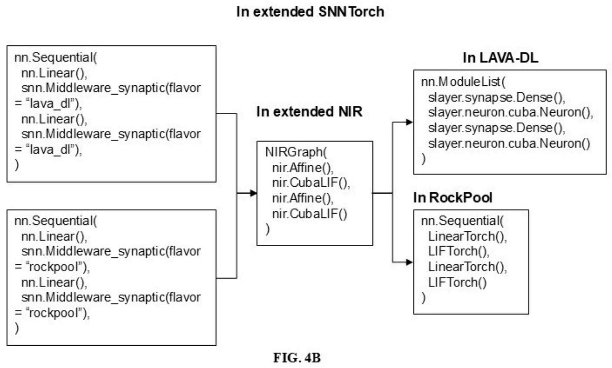

Referring now to the drawings, and more particularly to FIG. 1 through FIG. 4B, where similar reference characters denote corresponding features consistently throughout the figures, there are shown preferred embodiments, and these embodiments are described in the context of the following exemplary system and/or method.

FIG. 1 depicts an exemplary system 100 framework for simulation and cross-platform deployment of spiking neural network models, in accordance with an embodiment of the present disclosure. In an embodiment, the system 100 includes one or more hardware processors 104, communication interface device(s) or input/output (I/O) interface(s) 106 (also referred as interface(s)), and one or more data storage devices or memory 102 operatively coupled to the one or more hardware processors 104. The one or more processors 104 may be one or more software processing components and/or hardware processors. In an embodiment, the hardware processors can be implemented as one or more microprocessors, microcomputers, microcontrollers, digital signal processors, central processing units, state machines, logic circuitries, and/or any devices that manipulate signals based on operational instructions. Among other capabilities, the processor(s) is/are configured to fetch and execute computer-readable instructions stored in the memory. In an embodiment, the system 100 can be implemented in a variety of computing systems, such as laptop computers, notebooks, hand-held devices (e.g., smartphones, tablet phones, mobile communication devices, and the like), workstations, mainframe computers, servers, a network cloud, and the like. The I/O interface device(s) can include a variety of software and hardware interfaces, for example, a web interface, a graphical user interface, and the like and can facilitate multiple communications within a wide variety of networks N/W and protocol types, including wired networks, for example, LAN, cable, etc., and wireless networks, such as WLAN, cellular, or satellite. In an embodiment, the I/O interface device(s) can include one or more ports for connecting a number of devices to one another or to another server. For example, the I/O interface device(s) of the system 100 receives a plurality of configurations comprising a target hardware choice for deployment associated with a model to be created from one or more users in a middleware environment.

The memory 102 may include any computer-readable medium known in the art including, for example, volatile memory, such as static random-access memory (SRAM) and dynamic-random access memory (DRAM), and/or non-volatile memory, such as read only memory (ROM), erasable programmable ROM, flash memories, hard disks, optical disks, and magnetic tapes. In an embodiment, a database 108 is comprised in the memory 102, wherein the database 108 comprises information pertaining to input(s)/output(s) of each step performed by the processor(s) 104 of the system 100 and methods of the present disclosure and the like. The database 108 further comprises various code complexity levels such as (i) a low code complexity, (ii) a medium code complexity, or (iii) a high code complexity, and the like. For example, the database 108 of system 100 comprises plurality of simulation library and tools which include at least (i) one or more tools for converting Artificial Neural Network (ANN) to Spiking Neural Network (SNN); (ii) one or more libraries containing architectures of one or more neural network; (iii) one or more learning algorithms; and (iv) a hardware-abstraction library. The memory 102 further comprises (or may further comprise) information pertaining to input(s)/output(s) of each step performed by the systems and methods of the present disclosure. In other words, input(s) fed at each step and output(s) generated at each step are comprised in the memory 102 and can be utilized in further processing and analysis.

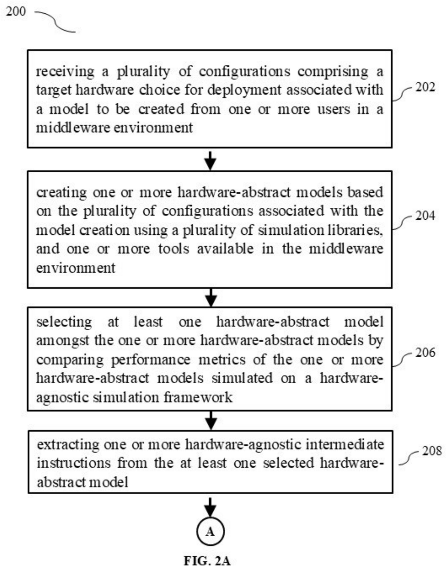

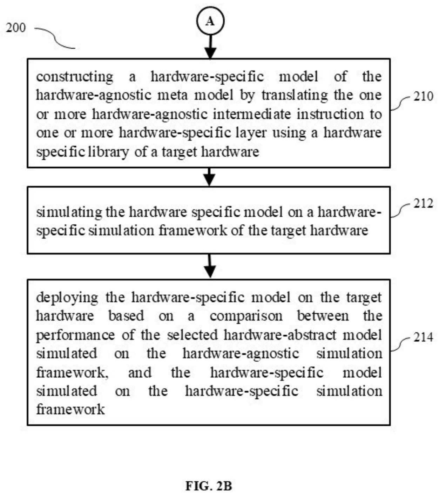

FIG.2A and FIG.2B depict an exemplary flow chart illustrating a method for simulation and cross-platform deployment of spiking neural network models using the systems of FIG. 1, in accordance with an embodiment of the present disclosure. In an embodiment, the system(s) 100 comprises one or more data storage devices or the memory 102 operatively coupled to the one or more hardware processors 104 and is configured to store instructions for execution of steps of the method by the one or more processors 104. The steps of the method of the present disclosure will now be explained with reference to components of the system 100 of FIG. 1, and the flow diagram as depicted in FIG.2A and FIG.2B. Although process steps, method steps, techniques or the like may be described in a sequential order, such processes, methods, and techniques may be configured to work in alternate orders. In other words, any sequence or order of steps that may be described does not necessarily indicate a requirement that the steps be performed in that order. The steps of processes described herein may be performed in any order practically feasible. Further, some steps may be performed simultaneously.

Now referring to FIG. 2A, at step 202 of the method 200 of the present disclosure, the one or more hardware processors 104 are configured to receive a plurality of configurations comprising a target hardware choice for deployment associated with a model to be created from one or more users in a middleware environment. The plurality of configurations are received using the Neuromorphic Application Abstraction Layer (NeuroAAL) of the middleware framework. The plurality of configurations comprises at least (i) one or more model design configuration such as data dimension, data type, task type, connection type, architecture type, encoder type and simulation framework; (ii) one or more model network configuration such as neuron type; number of input neurons, number of output neurons, enabling or disabling bias, and hyperparameters; (iii) one or more target performance metrics such as energy, latency and accuracy; (iv) one or more hardware parameter for model deployment for deploying the at least one selected hardware-abstract model, or combinations thereof.

Once the plurality of configurations is received, at step 204 of the method 200 the one or more hardware processors 104 are configured to create one or more hardware-abstract models using a plurality of simulation libraries, a hardware abstraction library, and one or more tools available in the middleware environment. The plurality of simulation libraries and one or more tools are provided by the Neuromorphic Middleware (NeuroMid) layer, and the hardware abstraction library is provided by Neuromorphic Hardware Abstraction Layer (NeuroHAL). The plurality of simulation library and tools comprises (i) one or more libraries containing one or more architectures of one or more neural networks; (ii) one or more learning algorithms; and (iii) a hardware-abstraction library. The plurality of simulation libraries enables at least (i) conversion of an Artificial Neural Network (ANN) to a Spiking Neural Network (SNN) or (ii) creation of the one or more hardware-abstract models based on the plurality of configurations provided by the one or more users in the middleware environment. The hardware abstraction library contains different flavors of Middleware synaptic neurons such as Middleware synaptic neuron with Lava-DL flavor, sinabs flavor, Rockpool flavor and so on. In the present disclosure, the hardware abstraction library is created by identifying one or more atomic operations associated with the plurality of neuromorphic computational primitive of one or more hardware-specific software framework such as Lava-DL, Rockpool, Sinabs and so on. The system 100 then converts each of the one or more atomic operations into one or more corresponding instructions using one or more pre-defined rules. For example, (i) an update of synaptic conductance ($WX[t + 1]$) is converted to an instruction _update_current() for updating synaptic current, (ii) a decay of synaptic conductance ($\propto I_{syn}[t]$) is converted to an instruction_decay_current() for decaying synaptic current, (iii) update of membrane potential ($\propto I_{syn}[t + 1]$) is converted to an instruction_update_voltage() for updating membrane potential, (iv) a decay of membrane potential ($\beta U_{mem}[t]$) is converted to an instruction_decay_voltage() for decaying membrane potential, (v) a trigger of spike ($S_{out}[t]$) is converted to an instruction_fire_spike() for triggering spike and (vi) a reset of membrane potential (R[t]) is converted to an instruction_reset_voltage() for resetting membrane potential. Thereafter each of the instructions is parameterized with at least one adjustable parameter to enable variation of the corresponding one or more atomic operation. For example, instruction_decay_current() is parameterized with a decay rate $\propto$, instruction_update_current() is parameterized with input, instruction _decay_volatge() is parameterized with a decay rate beta, and instruction _reset_voltage() is parameterized with a reset mechanism. The system 100 then creates the hardware abstract library for each of the hardware-specific software frameworks such as Lava-DL, Rockpool, and Sinabs by determining an execution order of the parameterized atomic instructions. The execution order of the parameterized atomic instructions varies for different hardware-specific software frameworks. This is determined and hardware abstract library having different flavors of Middleware synaptic neuron is created by extending snnTorchSnnTorch. For example, the Middleware synaptic LIF neuron for Lava-DL flavor abstracts the functionality of cuba neuron in Lava-DL1 and saves it as Middleware_Synaptic_LIF (flavor "Lava-DL") with the order of parameterised atomic instruction as follows: _decay_current() -> _update_current() -> _decay_volatge() -> _update_voltage() -> _fire_spike() -> _reset_voltage(). The the Middleware synaptic LIF neuron for Rockpool flavor abstract the functionality of as LIFTorch neuron and saves it as Middleware_Synaptic_LIF (flavor "Rockpool") with the order of parameterised atomic instruction as follows: _update_current() -> _decay_current() -> _decay_volatge() -> _update_voltage() -> _fire_spike() -> _reset_voltage().

After creating one or more hardware-abstract models, at step 206 of the method 200, the one or more hardware processors 104 select the best performing hardware-abstract model, by comparing performance metrics of the one or more hardware-abstract models simulated on a hardware-agnostic simulation framework. An interactive summary of the evaluation results including a confusion metrics, a classification metrics, and an actionable suggestions to improve model performance are also displayed by the Model Performance Dashboard.

At the next step 208 of the method 200, the one or more hardware processors 104 extract one or more hardware-agnostic intermediate instructions from the at least one selected hardware-abstract model. The disclosed method 200 uses an extended Neuromorphic Intermediate Representation (NIR) for extracting the hardware-agnostic meta model of a selected hardware-abstract model. A Layer Graph Representation (LGR) of the hardware-abstract model is initially constructed with one or more nodes representing each layer and one or more edges representing a connection between layers. The hardware-agnostic meta model information is then generated by mapping each of the layers of the LGR to corresponding intermediate instruction in a Neuromorphic Intermediate Representation (NIR).

At the next step 210 of the method 200, the one or more hardware processors 104 construct a hardware specific model by translating the one or more hardware-agnostic intermediate instructions to one or more hardware-specific layers using a hardware specific library of a target hardware. The hardware-agnostic meta model comprising the layer graph data and neuromorphic intermediate representation is translated to the hardware specific library of a target hardware by mapping neuromorphic intermediate instruction with one or more hardware primitive implementations corresponding to one or more hardware-specific layers of the target hardware.

At the next step 212 of the method 200 the one or more hardware processors 104 simulate the constructed hardware specific model on a hardware-specific simulation framework of the target hardware. For example, the neuromorphic computer chips, Loihi 2 has its own hardware-specific simulators, Lava-DL and Rockpool for Xylo™.

At the next step 212 of the method 200 the one or more hardware processors 104 deploy the target hardware-specific model on the target hardware based on performance. An associated middleware framework deploys the target hardware-specific model on the target hardware only if the performance difference from the hardware-abstract model simulated on the hardware-agnostic simulation framework is within acceptable error range. If the performance difference is too large, then the system 100 sends a feedback to the model creation step 204 for refinement or terminating the deployment process.

USE CASE Example: One of the applications of method 200, is for cloud cover detection. A 2D image data which is non-spiking in nature is received as an input by the system 100. The task type is classification, where the system 100 classifies the image as cloudy or not cloudy. The unique selling point (USP) of the task is to reduce latency in identifying the cloudy images and do that using minimal power. The requirements are specified (e.g., by one or more users such as developers) in the NeuroAAL layer, which is a graphical user interface, and the system 100 may recommend the one or more users that a feed-forward spiking neural network is the best fit network architecture for this task. The system 100 then creates a (basic) framework of feed-forward architecture with a few layers each armed with few neurons and connected via few synapses via an Application Programming Interface (API) call. This API call is configured to call a network architecture library of NeuroMID where all relevant libraries and tools are present and are exposed via one or more respective APIs. Since the data is non-spiking, the data needs to be encoded into spikes and that is another API call to spike encoder library. Data is fed (e.g., by the one or more users) via "data feeder" for training and once the training is done i.e. model is created, the system 100 hands over the model to NeuroHAL that creates a computation graph of the same model for a particular hardware. Brainchip Akida™ 1500 can be one such hardware. It has some limitations and a particular methodology - based on which the computation graph will be ported into this hardware automatically without the need of intervention by the one or more users about all these intricacies.

EXPERIMENTAL RESULTS:

The disclosed method was experimented on two feed-forward models: one performing digit classification on Modified National Institute of Standards and Technology (MNIST) dataset (available at https://www.kaggle.com/datasets/hojjatk/mnist-dataset) which can be and the other performing timeseries classification on FordA dataset (available at https://www.timeseriesclassification.com/description.php?Dataset=FordA). The network architecture was the same for both cases. The data type includes raw image, Poisson-encoded image and delta-encoded timeseries signal. The network architecture used was a Middleware synaptic neuron of specific flavor and the models were trained in the snnTorch. Next the trained models with specific layer parameters (weight and bias) were ported in target frameworks (Lava-DL or Rockpool) and a model performance was inferred. The model performance in the snnTorch was compared against the same in Lava-DL and Rockpool frameworks. The results for feed-forward model processing raw image, Poisson-encoded image, and delta-encoded timeseries signals are shown in Table 1.

Table 1

| Data Type | snnTorch Framework ((Middleware _Synaptic_LI F (flavor Lava-DL)) | Lava-DL framework (cuba.neuro n) | snnTorch Framework ((Middlewa re_Synaptic _LIF (flavor Rockpool)) | Rockpool framework (LIF Torch) |
|---|---|---|---|---|
| Raw Image | 87.32% | 86.8% | 86.47% | 86.39% |
| Poisson-encoded image | 78.93% | 66.18% | 80.45% | 80.38% |
| Delta-encoded timeseries signals | 80.57% | 71.29% | 84.47% | 84.21% |

From Table 1, it is clear that the model trained in the snnTorch framework with Middleware synaptic Rockpool flavored neuron harnesses performance that is achievable in Rockpool framework for all data types. However, the performance harnessed by snnTorch model with Lava-DL flavored Middleware synaptic neuron is not achievable by Lava-DL framework for Poisson-encoded image and delta-encoded timeseries signal due to differences in synapse implementation. This gap can also be mitigated by standardizing synaptic connections in hardware-agnostic simulation framework. This performance cannot be met by models constructed in standard snnTorch and converted via the current Neuromorphic intermediate representation (NIR) framework.

The embodiments of present disclosure herein address unresolved problem of performance discrepancy when a model trained on hardware-agnostic framework such as the snnTorch is inferred in hardware specific framework. The embodiment thus enables the system and the method of the present disclosure create a hardware abstract library by abstracting the functionalities in hardware-agnostic simulation framework (snnTorch) and convert the same to hardware-specific software frameworks.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

It is noted that embodiments described herein are discussed in the context of an Artificial Intelligence (AI) model / Machine Learning (ML) model and/ or with a mentioned training data set. It is to be understood by a person having ordinary skill in the art or person skilled in the art that the referred AI/ML model(s) are exemplary and shall not be construed as limiting the scope of the present disclosure and they may be trained by any training dataset that meets the mentioned defining characteristics / or has characteristics that define the exemplary training dataset mentioned.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

**Claims**

1. A processor implemented method (200) comprising:

   receiving, via one or more hardware processors, a plurality of configurations comprising a target hardware choice for deployment associated with a model to be created from one or more users in a middleware environment (202);
   creating, via the one or more hardware processors, one or more hardware-abstract models based on the plurality of configurations associated with the model creation using a plurality of simulation libraries, and one or more tools available in the middleware environment (204);
   selecting, via the one or more hardware processors, at least one hardware-abstract model amongst the one or more hardware-abstract models by comparing performance metrics of the one or more hardware-abstract models simulated on a hardware-agnostic simulation framework (206);
   extracting, via the one or more hardware processors, one or more hardware-agnostic intermediate instructions from the at least one selected hardware-abstract model (208);
   constructing, via the one or more hardware processors, the one or more hardware processors, a hardware-specific model of the hardware-agnostic meta model by translating the one or more hardware-agnostic intermediate instructions to one or more hardware-specific layers using a hardware specific library of a target hardware (210);
   simulating, via the one or more hardware processors, the hardware specific model on a hardware-specific simulation framework of the target hardware (212); and
   deploying, via the one or more hardware processors, the simulated hardware-specific model on the target hardware based on a comparison between the performance of the at least one selected hardware-abstract model simulated on the hardware-agnostic simulation framework, and the hardware-specific model simulated on the hardware-specific simulation framework (214).

2. The processor implemented method as claimed in claim 1, wherein the plurality of configurations comprises at least (i) one or more model design configuration; (ii) one or more model network configuration; (iii) one or more target performance metrics; and (iv) one or more hardware parameter for deploying the at least one selected hardware-abstract model.

3. The processor implemented method as claimed in claim 1, wherein the plurality of simulation libraries comprises (i) one or more libraries containing one or more architectures of one or more neural networks; (ii) one or more learning algorithms; and (iii) a hardware-abstraction library, and wherein the plurality of simulation libraries enable at least (i) conversion of an Artificial Neural Network (ANN) to a Spiking Neural Network (SNN) or (ii) creation of the one or more hardware-abstract models based on the plurality of configurations provided by the one or more users in the middleware environment.

4. The processor implemented method as claimed in claim 3, wherein the hardware-abstraction library is created by:

   identifying, via the or more hardware processors, one or more atomic operation of a plurality of neuromorphic computational primitives associated with the hardware-specific simulation framework of the target hardware;
   constructing, via the one or more hardware processors, an atomic instruction corresponding to each of the one or more atomic operations using a plurality of predefined rules;
   parametrizing, via the one or more hardware processors, the atomic instruction with at least one adjustable parameter corresponding to (i) one or more current decay rates (ii) one or more voltage decay rates, and (iii) one or more reset mechanisms for membrane potential to enable a variation of the corresponding one or more atomic operations; and
   creating, via the one or more hardware processors, the hardware abstract library of the one or more hardware-specific versions by determining an execution order of the parameterized atomic instruction corresponding to each of the one or more hardware-specific versions of each of the plurality of neuromorphic computational primitives.

5. A system (100), comprising:

   a memory (104) storing instructions;

one or more communication interfaces (106); and

one or more hardware processors (102) coupled to the memory (104) via the one or more communication interfaces (106), wherein the one or more hardware processors (102) are configured by the instructions to:

receive a plurality of configurations comprising a target hardware choice for deployment associated with a model to be created from one or more users in a middleware environment;

create one or more hardware-abstract models based on the plurality of configurations associated with the model creation using a plurality of simulation libraries, and one or more tools available in the middleware environment;

select at least one hardware-abstract model amongst the one or more hardware-abstract models by comparing performance metrics of the one or more hardware-abstract models simulated on a hardware-agnostic simulation framework;

extract one or more hardware-agnostic intermediate instructions from the at least one selected hardware-abstract model;

construct a hardware-specific model of the hardware-agnostic meta model by translating the one or more hardware-agnostic intermediate instructions to one or more hardware-specific layers using a hardware specific library of a target hardware;

simulate the hardware specific model on a hardware-specific simulation framework of the target hardware; and

deploy the simulated hardware-specific model on the target hardware based on a comparison between the performance of the at least one selected hardware-abstract model simulated on the hardware-agnostic simulation framework, and the hardware-specific model simulated on the hardware-specific simulation framework.

6. The system as claimed in claim 5, wherein the plurality of configurations comprises at least (i) one or more model design configuration; (ii) one or more model network configuration; (iii) one or more target performance metrics; and (iv) one or more hardware parameter for deploying the at least one selected hardware-abstract model.

7. The system as claimed in claim 5, wherein the plurality of simulation libraries comprises (i) one or more libraries containing one or more architectures of one or more neural networks; (ii) one or more learning algorithms; and (iii) a hardware-abstraction library, and wherein the plurality of simulation libraries enable at least (i) conversion of an Artificial Neural Network (ANN) to a Spiking Neural Network (SNN) or (ii) creation of the one or more hardware-abstract models based on the plurality of configurations provided by the one or more users in the middleware environment.

8. The system as claimed in claim 7, wherein the hardware-abstraction library is created by:

identify one or more atomic operation of a plurality of neuromorphic computational primitives associated with the hardware-specific simulation framework of the target hardware;

construct an atomic instruction corresponding to each of the one or more atomic operations using a plurality of predefined rules;

parametrize the atomic instruction with at least one adjustable parameter corresponding to (i) one or more current decay rates (ii) one or more voltage decay rates, and (iii) one or more reset mechanisms for membrane potential to enable a variation of the corresponding one or more atomic operations; and

create the hardware abstract library of the one or more hardware-specific versions by determining an execution order of the parameterized atomic instruction corresponding to each of the one or more hardware-specific versions of each of the plurality of neuromorphic computational primitives.

9. One or more non-transitory machine-readable information storage mediums comprising one or more instructions which when executed by one or more hardware processors cause:

receiving a plurality of configurations comprising a target hardware choice for deployment associated with a model to be created from one or more users in a middleware environment;

creating one or more hardware-abstract models based on the plurality of configurations associated with the model creation using a plurality of simulation libraries, and one or more tools available in the middleware environment;

selecting at least one hardware-abstract model amongst the one or more hardware-abstract models by comparing performance metrics of the one or more hardware-abstract models simulated on a hardware-agnostic simulation framework;

extracting one or more hardware-agnostic intermediate instructions from the at least one selected hardware-abstract model;

constructing the one or more hardware processors, a hardware-specific model of the hardware-agnostic meta model by translating the one or more hardware-agnostic intermediate instructions to one or more hardware-specific layers using a hardware specific library of a target hardware;

simulating the hardware specific model on a hardware-specific simulation framework of the target hardware; and

deploying the simulated hardware-specific model on the target hardware based on a comparison between the performance of the at least one selected hardware-abstract model simulated on the hardware-agnostic simulation framework, and the hardware-specific model simulated on the hardware-specific simulation framework.

10. The one or more non-transitory machine-readable information storage mediums as claimed in claim 9, wherein the plurality of configurations comprises at least (i) one or more model design configuration; (ii) one or more model network configuration; (iii) one or more target performance metrics; and (iv) one or more hardware parameter for deploying the at least one selected hardware-abstract model.

11. The one or more non-transitory machine-readable information storage mediums as claimed in claim 9, wherein the plurality of simulation libraries comprises (i) one or more libraries containing one or more architectures of one or more neural networks; (ii) one or more learning algorithms; and (iii) a hardware-abstraction library, and wherein the plurality of simulation libraries enable at least (i) conversion of an Artificial Neural Network (ANN) to a Spiking Neural Network (SNN) or (ii) creation of the one or more hardware-abstract models based on the plurality of configurations provided by the one or more users in the middleware environment.

12. The one or more non-transitory machine-readable information storage mediums as claimed in claim 11, wherein the hardware-abstraction library is created by:

identifying one or more atomic operation of a plurality of neuromorphic computational primitives associated with the hardware-specific simulation framework of the target hardware;

constructing an atomic instruction corresponding to each of the one or more atomic operations using a plurality of predefined rules;

parametrizing the atomic instruction with at least one adjustable parameter corresponding to (i) one or more current decay rates (ii) one or more voltage decay rates, and (iii) one or more reset mechanisms for membrane potential to enable a variation of the corresponding one or more atomic operations; and

creating the hardware abstract library of the one or more hardware-specific versions by determining an execution order of the parameterized atomic instruction corresponding to each of the one or more hardware-specific versions of each of the plurality of neuromorphic computational primitives.

System 100

Processor(s) 104

I/O Interface(s) 106

Memory 102

Database 108

Modules 110

FIG. 1

200

receiving a plurality of configurations comprising a target hardware choice for deployment associated with a model to be created from one or more users in a middleware environment ⟋ 202

↓

creating one or more hardware-abstract models based on the plurality of configurations associated with the model creation using a plurality of simulation libraries, and one or more tools available in the middleware environment ⟋ 204

↓

selecting at least one hardware-abstract model amongst the one or more hardware-abstract models by comparing performance metrics of the one or more hardware-abstract models simulated on a hardware-agnostic simulation framework ⟋ 206

↓

extracting one or more hardware-agnostic intermediate instructions from the at least one selected hardware-abstract model ⟋ 208

↓

( A )

**FIG. 2A**

200

(A)

constructing a hardware-specific model of the hardware-agnostic meta model by translating the one or more hardware-agnostic intermediate instruction to one or more hardware-specific layer using a hardware specific library of a target hardware ⟋ 210

simulating the hardware specific model on a hardware-specific simulation framework of the target hardware ⟋ 212

deploying the hardware-specific model on the target hardware based on a comparison between the performance of the selected hardware-abstract model simulated on the hardware-agnostic simulation framework, and the hardware-specific model simulated on the hardware-specific simulation framework ⟋ 214

**FIG. 2B**

User

**NeuroAAL**

| Acquiring model configuration | configuration | Model training and evaluation | abstract hardware-dependent model | HW-agnostic tuning | abstract hardware-dependent tuned model | Model deployment |

abstract hardware-dependent tuned model

**NeuroMid**

| Tools | Training algos |

Simulation libraries

**NeuroHAL**

*H/W abstract library*
abstracting hardware specific libraries

| Lava |
| Rockpool |
| Sinabs |

*Deployment backend*

Converting simulated model into NIR meta model

NIR meta-model

Converting NIR meta model into H/W specific model

equivalent performance

HW specific model

| Lava | Rockpool | Sinabs |
| Loihi | Xylo | Speck |

*Hardware pool*

**FIG. 3**

**In LAVA-DL**

```
nn.ModuleList(
  slayer.synapse.Dense(),
  slayer.neuron.cuba.Neuron(),
  slayer.synapse.Dense(),
  slayer.neuron.cuba.Neuron()
)
```

**In SNNTorch**

```
nn.Sequential(
  nn.Linear(),
  snn.Synaptic(),
  nn.Linear(),
  snn.Synaptic()
)
```

**In NIR**

```
NIRGraph(
  nir.Affine(),
  nir.CubaLIF(),
  nir.Affine(),
  nir.CubaLIF()
)
```

**In RockPool**

```
nn.Sequential(
  LinearTorch(),
  LIFTorch(),
  LinearTorch(),
  LIFTorch()
)
```

**FIG. 4A**

**In extended SNN Torch**

```
nn.Sequential(
  nn.Linear(),
  snn.Middleware_synaptic(flavor
= "lava_dl"),
  nn.Linear(),
  snn.Middleware_synaptic(flavor
= "lava_dl"),
)
```

```
nn.Sequential(
  nn.Linear(),
  snn.Middleware_synaptic(flavor
= "rockpool"),
  nn.Linear(),
  snn.Middleware_synaptic(flavor
= "rockpool"),
)
```

**In extended NIR**

```
NIRGraph(
  nir.Affine(),
  nir.CubaLIF(),
  nir.Affine(),
  nir.CubaLIF()
)
```

**In LAVA-DL**

```
nn.ModuleList(
  slayer.synapse.Dense(),
  slayer.neuron.cuba.Neuron(),
  slayer.synapse.Dense(),
  slayer.neuron.cuba.Neuron()
)
```

**In RockPool**

```
nn.Sequential(
  LinearTorch(),
  LIFTorch(),
  LinearTorch(),
  LIFTorch()
)
```

**FIG. 4B**

## EUROPEAN SEARCH REPORT

**Application Number**

EP 25 21 5193

### DOCUMENTS CONSIDERED TO BE RELEVANT

| Category | Citation of document with indication, where appropriate, of relevant passages | Relevant to claim |
|---|---|---|
| A | BOYLE JAMES ET AL: "Performance and Energy Simulation of Spiking Neuromorphic Architectures for Fast Exploration", THE 2ND WORKSHOP ON THE SECURITY IMPLICATIONS OF DEEPFAKES AND CHEAPFAKES ACMPUB27, NEW YORK, NY, USA, 1 August 2023 (2023-08-01), pages 1-4, XP059416641, DOI: 10.1145/3589737.3605970 ISBN: 9798400702037 * figure 2 * * abstract * * section 4 * ----- | 1-12 |

**CLASSIFICATION OF THE APPLICATION (IPC)**

INV.
G06N3/049
G06N3/10

ADD.
G06N3/048
G06N3/06

**TECHNICAL FIELDS SEARCHED (IPC)**

G06N

The present search report has been drawn up for all claims

| Place of search | Date of completion of the search | Examiner |
|---|---|---|
| The Hague | 17 March 2026 | Theissing, Simon |

EPO FORM 1503 03.82 (P04C01)

EP 4 745 844 A1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- IN 202421087827